# FASCICULE DE BREVET EUROPEEN

(11) **EP 1 514 815 B1**
(45) Date de publication et mention de la délivrance du brevet: **04.07.2007**
(21) Numéro de dépôt: 04292179.1
(22) Date de dépôt: 10.09.2004
(51) Int. Cl.: B65G 47/32, B65G 47/08, B65G 47/84

(54) **Procédé et dispositif de formation et d'espacement de lots successifs d'articles**
Verfahren und Vorrichtung zum Bilden von Gruppen von Gegenständen und Einstellen des Abstands zwischen den Gruppen
Method and device for forming and spacing groups of articles

(30) Priorité: 12.09.2003 FR 0350536
(43) Date de publication de la demande: 16.03.2005
(73) Titulaire: ARIES PACKAGING, 10430 Rosieres Pres Troyes (FR)
(72) Inventeur: De Guglielmo, Pascal, 10200 Montgueux (FR); Hautefaye, Jean Christophe, 10300 Sainte Savine (FR)
(74) Mandataire: Geismar, Thierry

(56) Documents cités:
- EP-A- 0 860 385
- EP-A- 1 153 859
- US-A- 3 482 674
- US-A- 5 699 651
- US-B1- 6 443 689

## Description

L'invention concerne un procédé de formation et de séparation de lots successifs d'articles, ainsi qu'un dispositif mettant en oeuvre ce procédé.

L'invention s'applique notamment au conditionnement d'articles tels que des bouteilles, des canettes ou des pots (par exemple des pots de yaourt) généralement de forme cylindrique.

Dans l'industrie du conditionnement, les distributeurs cherchent à proposer une gamme de produits emballés toujours plus diversifiée tout en augmentant les cadences de production. Il est donc important de pouvoir régler rapidement un dispositif d'emballage, afin que celui-ci puisse conditionner les produits d'un grand nombre de manières. On s'intéresse plus particulièrement au nombre d'articles emballés ensemble, en effet les distributeurs offrent souvent un choix important de conditionnements pour un même produit : bouteilles emballées par deux, trois ou six par exemple.

Il est connu d'acheminer les articles un à un jusqu'à un dispositif de groupage formant et espaçant les lots d'articles puis d'acheminer les lots vers un poste permettant leur conditionnement.

Pour ce faire, le dispositif de groupage est agencé pour grouper un nombre déterminé d'articles formant un lot puis pour augmenter la vitesse d'acheminement du lot afin de l'espacer des lots suivants.

Dans le document EP-1 116 675, l'organe de groupage se présente sous la forme d'une roue dentée dans laquelle chaque dent peut être accélérée pour espacer un lot du suivant. Cependant dans un tel dispositif, l'espacement entre les dents est sensiblement constant, ce qui ne permet pas régler facilement le nombre d'articles par lot. Pour faire varier ce nombre, il faut en effet démonter la roue dentée pour changer le nombre et/ou la répartition des dents sur la roue.

Dans le document EP-0 860 385, le dispositif de groupage comprend un organe rotatif comprenant plusieurs secteurs, chacun déplacé en rotation par un arbre rotatif relié à un moyen moteur dont la vitesse est commandée. Ainsi un premier secteur entraîne plusieurs articles, puis ce secteur est accéléré par son arbre rotatif pour le séparer du secteur suivant qui en est à l'étape de formation du lot suivant.

Un tel dispositif permet de choisir l'espacement entre chaque lot en adoptant un profil de vitesses approprié. Cependant, chaque secteur est prévu pour former un lot comprenant un nombre déterminé et constant d'articles. Un tel dispositif est donc difficilement modulable et ne permet pas de modifier, sans changement des pièces constitutives du dispositif, le nombre d'articles par lot.

De plus, les dispositifs décrits ci-dessus permettent de pousser les articles en amont, mais pas de les retenir en aval, ce qui peut entraîner des chutes d'articles hors du dispositif.

Le document US 5,699,651 décrit un procédé selon le préambule de la revendication 1 et un dispositif selon le préambule de la revendication 3.

L'invention vise à pallier ces inconvénients en proposant un procédé et un dispositif de formation et d'espacement de lots successifs d'articles qui permettent de régler le nombre d'articles par lot et le pas entre chaque lot de façon simple et rapide ainsi que d'éviter leur chute hors du dispositif.

A cet effet, l'invention concerne un procédé de formation et d'espacement de lots successifs d'articles comprenant les phases suivantes :
- acheminer des articles un à un le long d'un convoyeur d'alimentation jusqu'à un poste d'alimentation, à une vitesse d'entrée sensiblement constante ;
- grouper et transférer un nombre déterminé d'articles sous forme d'un lot du poste d'alimentation à un poste de sortie par l'intermédiaire de moyens de transfert rotatifs du type comprenant au moins un premier et un deuxième arbres rotatifs coaxiaux aptes à être mis en rotation indépendamment l'un de l'autre par des moyens moteurs asservis en vitesse par un dispositif de commande, le premier et le deuxième arbres étant respectivement reliés à un premier et à un deuxième organes de transfert rotatifs ayant une vitesse de transfert non constante et déterminée par le dispositif de commande ;
- acheminer les articles sous forme de lots successifs le long d'un convoyeur de sortie à partir du poste de sortie, à une vitesse de sortie supérieure à la vitesse d'entrée.

La phase de groupement et de transfert d'articles comprend les étapes suivantes :
- engager, au poste d'alimentation, un premier organe d'entraînement d'articles porté par le premier organe de transfert rotatif en amont d'un article faisant partie d'un lot d'articles en aval à une vitesse de transfert égale à la vitesse d'entrée ;
- accélérer progressivement le premier organe de transfert rotatif et ainsi le lot d'articles jusqu'au poste de sortie de façon à ce que la vitesse de transfert au poste de sortie soit égale à la vitesse de sortie ;
- désengager, au poste de sortie, le premier organe d'entraînement d'articles,
- engager au poste d'alimentation un deuxième organe d'entraînement porté par le deuxième organe de transfert avec un espace variable et déterminé par le dispositif de commande entre le premier et le deuxième organes d'entraînement, de manière que le réglage du dispositif de commande permette de faire varier le nombres d'articles par lot et/ou le pas entre chaque lot; les premier et deuxième organes de transfert étant respectivement des disques coaxiaux rotatifs autour de l'axe des arbres coaxiaux.

Selon un aspect, la phase de groupement et de transfert d'articles comprend une étape de retour du premier organe d'entraînement après qu'il a été désengagé au poste de sortie de façon à ce que cet organe d'entraînement forme organe de retenue pour le lot d'articles entraîné par le deuxième organe d'entraînement.

L'invention concerne aussi un dispositif pour la formation et l'espacement de lots successifs d'articles, pour la mise en oeuvre du procédé décrit ci-dessus, comprenant :
- un convoyeur d'alimentation le long duquel les articles sont acheminés un à un jusqu'à un poste d'alimentation à une vitesse d'entrée sensiblement constante ;
- un convoyeur de sortie apte à recevoir depuis un poste de sortie des lots successifs d'articles pour les acheminer à une vitesse de sortie sensiblement constante et supérieure à la vitesse d'entrée ;
- des moyens de transfert des articles depuis le poste d'alimentation jusqu'au poste de sortie tels que les articles acheminés un à un au poste d'alimentation se trouvent en lots successifs au poste de sortie, lesdits moyens de transfert étant du type comprenant au moins un premier et un deuxième arbres rotatifs coaxiaux, chacun étant apte à être mis en rotation indépendamment l'un de l'autre par un moyen moteur asservi en vitesse par un dispositif de commande, lesdits arbres entraînant en rotation et étant reliés à un premier et à un deuxième organes de transfert rotatifs respectivement.

Chaque organe de transfert porte au moins un organe d'entraînement d'articles agencé pour être engagé au poste d'alimentation en amont d'un article faisant partie d'un lot d'articles en aval comprenant un nombre déterminé d'articles et être désengagé au poste de sortie, cet organe de transfert ayant une vitesse de transfert non constante et déterminée par le dispositif de commande par l'intermédiaire des arbres rotatifs,
ladite vitesse de transfert étant telle qu'elle est sensiblement égale à la vitesse d'entrée lorsque l'organe d'entraînement est engagé au poste d'alimentation, puis augmente progressivement jusqu'à être sensiblement égale à la vitesse de sortie lorsque l'organe d'entraînement est désengagé au poste de sortie.

La structure du dispositif est telle qu'un premier organe d'entraînement porté par le premier organe de transfert est suivi par un deuxième organe d'entraînement porté par le deuxième organe de transfert avec un espace variable et déterminé par le dispositif de commande entre le premier et le deuxième organes d'entraînement, de manière que le réglage du dispositif de commande permette de faire varier le nombre d'articles par lot et/ou le pas entre chaque lot.

Les premier et deuxième organes de transfert sont respectivement des disques coaxiaux rotatifs autour de l'axe des arbres coaxiaux.

D'autres objets et avantages de l'invention apparaîtront au cours de la description qui suit, faite en référence aux dessins annexés.
La figure 1 est une vue en perspective d'un dispositif selon l'invention, ledit dispositif formant et espaçant des lots d'articles successifs.
La figure 2 est une vue de dessus de l'agencement du dispositif selon l'invention illustrant le procédé de formation et d'espacement d'articles en lots successifs.
La figure 3 est une vue de dessus de l'agencement du dispositif selon l'invention dans laquelle le procédé comprend une étape de retour d'un organe d'entraînement afin que celui-ci forme organe de retenue.

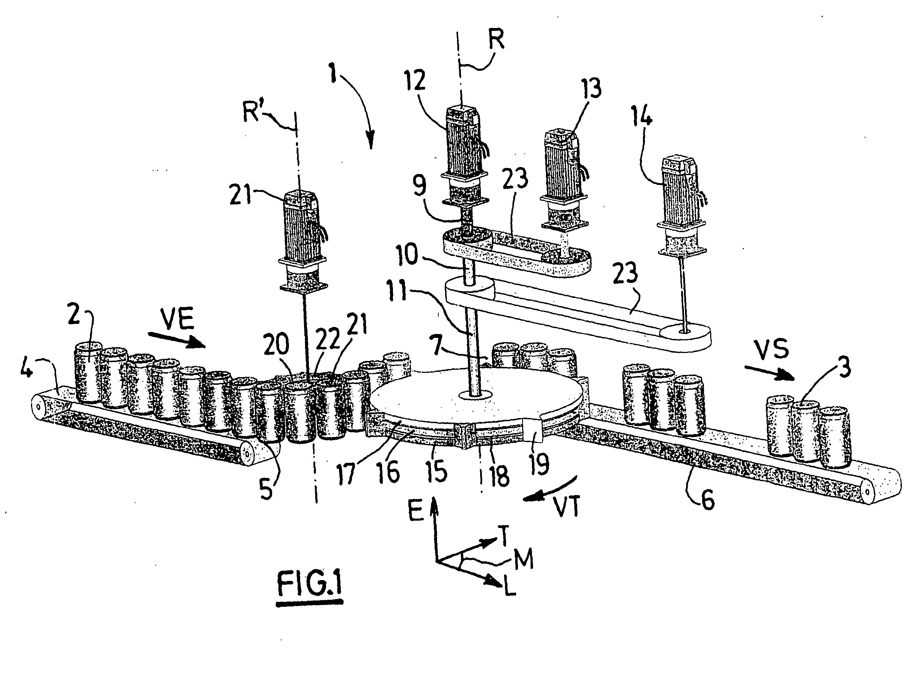

En référence à la figure 1, on décrit maintenant un mode de réalisation d'un dispositif 1 pour la formation et l'espacement de lots 3 successifs d'articles 2 tels que des bouteilles ou canettes, à partir desquels sont formés des produits finis tels que des packs.

Pour être conditionnés, les articles 2 subissent au moins une opération de groupage par lots 3 espacés les uns des autres. Cette opération a lieu dans un plan M sensiblement horizontal.

Les articles 2 sont acheminés vers le dispositif 1 selon une direction L longitudinale comprise dans le plan M. Les lots 3 formés quittent le dispositif selon la même direction L. On définit également une direction T transversale perpendiculaire à la direction L dans le plan M, ainsi qu'une direction E d'élévation perpendiculaire aux directions L et T de façon que les trois directions forment un trièdre direct.

On définit les termes « amont » et « aval » par rapport à la direction L, et les termes « au dessus » et « hauteur » par rapport à la direction E.

Le dispositif 1 comprend un convoyeur d'alimentation 4 sur lequel sont acheminés les articles 2, les uns à la suite des autres, par exemple sensiblement sans espace entre eux, dans la direction L. Les articles sont acheminés jusqu'à un poste d'alimentation 5 en aval, par exemple confondu avec une extrémité du convoyeur 4.

Le convoyeur d'alimentation 4 achemine les articles 2 à une vitesse d'entrée VE sensiblement constante. Ce convoyeur est par exemple un tapis roulant motorisé ou tout autre moyen équivalent.

Le dispositif 1 comprend également un convoyeur de sortie 6 le long duquel les articles 2 groupés en lots 3 successifs espacés sont acheminés vers le reste du système de conditionnement. Le convoyeur de sortie 6 transporte les articles 2 d'amont en aval depuis un poste de sortie 7 par exemple confondu avec l'extrémité amont du convoyeur de sortie 6. Les lots 3 sont acheminés à une vitesse de sortie VS, sensiblement constante et supérieure à la vitesse d'entrée VE. Le convoyeur de sortie 6 est par exemple du même type que le convoyeur d'alimentation 4.

Entre le convoyeur d'alimentation 4 et le convoyeur de sortie 6, des moyens de transfert 8 sont agencés. Ces moyens permettent de grouper les articles 2 par lot 3 à partir du poste d'alimentation 5, d'espacer les lots les uns des autres et de les transférer sur le convoyeur de sortie 6 au poste de sortie 7.

Ces moyens de transfert sont agencés pour permettre de faire varier le nombre d'articles 2 par lot 3 et l'espacement entre deux lots d'articles sans avoir à interrompre le processus de conditionnement.

A cet effet, les moyens de transferts comprennent au moins deux arbres rotatifs coaxiaux. Dans le mode de réalisation représenté sur les figures, les moyens de transfert comprennent trois arbres rotatifs coaxiaux 9, 10 et 11. Chaque arbre est apte à tourner indépendamment des autres autour d'un axe R sensiblement parallèle à la direction E et est entraîné par un moyen moteur, respectivement 12, 13 et 14.

Ces moyens moteur sont commandés en vitesse par un dispositif de commande, non représenté sur les figures. L'opérateur peut, en utilisant ce dispositif, imposer des profils de vitesse aux moyens moteur et ainsi piloter la rotation de chaque arbre 9, 10 et 11 selon des profils de vitesses souhaités. Les moyens moteurs 12, 13 et 14 sont des moteurs dont les vitesses de rotation sont réglables de façon continue, des moteurs du type électriques à courant continu sans balais par exemple.

Selon le mode de réalisation représenté sur la figure 1, le moyen moteur 12 est directement relié à l'arbre 9, tandis que les moyens moteur 13 et 14 peuvent respectivement entraîner les arbres 10 et 11 au moyen de poulies 23.

Les arbres 9, 10, 11 sont respectivement reliés à des organes de transfert 15, 16 et 17. Les arbres entraînent ces organes de transfert 15, 16 et 17 en rotation autour de l'axe R. Chaque organe peut donc tourner indépendamment des autres et est commandé en vitesse par le dispositif de commande.

Les organes de transfert 15, 16 et 17 se présentent sous la forme de disques. Les disques sont de préférence sensiblement similaires, agencés les uns au dessus des autres et portent chacun au moins un organe d'entraînement d'articles 19. Sur le mode de réalisation représenté sur les figures, chaque organe de transfert comprend deux organes d'entraînement 19 diamétralement opposés sur la périphérie du disque.

Les organes d'entraînement 19 sont, en outre, agencés de façon à ce que, sur la périphérie des organes de transfert 15, 16 et 17, l'organe d'entraînement d'un organe de transfert soit adjacent à un organe d'entraînement d'un autre organe de transfert.

L'organe d'entraînement d'articles 19 se présente par exemple sous la forme d'une dent s'étendant radialement à partir de la périphérie des organes de transfert. Les organes d'entraînement 19 peuvent en outre être agencés pour s'étendre au-delà de chaque organe de transfert selon la direction E de façon à présenter une hauteur égale à l'épaisseur totale des organes de transfert superposés. Ainsi les organes d'entraînement présentent une plus grande surface de coopération avec les articles, ce qui permet de réduire les risques de chutes.

Les moyens de transfert 8 tournent à une vitesse de transfert VT non constante, comprise entre VE et VS.

Les moyens de transfert 8 sont agencés de manière qu'un organe d'entraînement 19 puisse être engagé au poste d'alimentation 5 en amont d'un article 2 appartenant à un lot 3 s'étendant en aval de l'organe d'entraînement à une vitesse VT sensiblement égale à VE et désengagé, à une vitesse VT sensiblement égale à VS, au poste de sortie 7 après avoir décrit une partie de trajectoire circulaire, durant laquelle la vitesse VT est passée de VE à VS.

A cet effet, la dent formant organe d'entraînement 19 comprend une face amont et une face aval ayant chacune une forme complémentaire d'une partie d'un article 2 de manière à pouvoir entraîner ou retenir un article 2 à l'aide respectivement de la face aval et de la face amont.

Les moyens de transfert 8 peuvent comprendre en outre des moyens 20 disposés à proximité du poste d'alimentation 5, aptes à ordonner et cadencer les articles 2 en provenance du convoyeur d'alimentation 4, pour qu'ils présentent le positionnement et l'écartement voulus au moment de l'engagement d'un organe d'entraînement 19 en amont d'un article 2.

Ces moyens se présentent par exemple sous la forme d'une roue étoilée entraînée en rotation autour d'un axe R' sensiblement parallèle à l'axe R par un moyen moteur 21. Le moyen moteur 21 est par exemple similaire aux moyens moteur 12, 13 et 14 et est également commandé en vitesse par le dispositif de commande.

La roue étoilée 20 comprend à sa périphérie une denture 21 apte à engrener et désengrener les articles 2. La denture 21 présente des logements 22 aptes à recevoir individuellement les articles. La vitesse tangentielle de la roue étoilée 20 est sensiblement égale à la vitesse d'entrée VE.

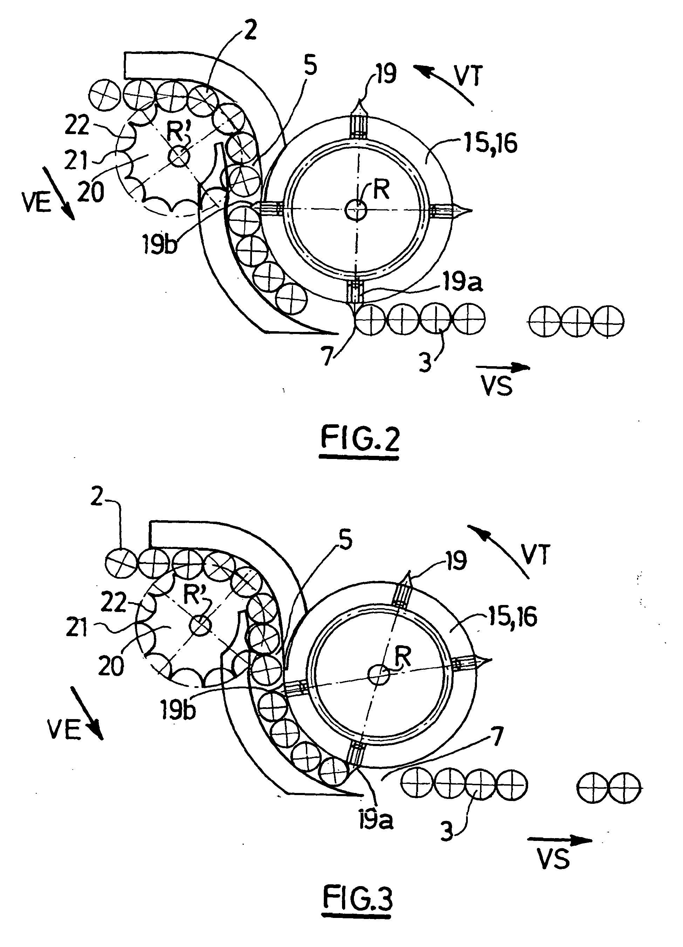

Le procédé de formation et d'espacement de lots successifs d'articles, mettant en oeuvre le dispositif décrit ci-dessus, va maintenant être décrit en relation avec les figures 2 et 3.

Dans le mode de réalisation représenté sur ces figures, les moyens de transfert comprennent un premier et un deuxième organes de transfert, respectivement 15 et 16, superposés l'un au dessus de l'autre et portant chacun deux organes d'entraînement 19 diamétralement opposés sur la périphérie des organes de transfert 15 et 16. Les moyens de transfert entraînent les organes d'entraînement selon une trajectoire circulaire.

De plus, les organes d'entraînement 19 sont agencés de façon à ce qu'un organe d'entraînement 19a du premier organe de transfert 15 soit suivi par un organe d'entraînement 19b du deuxième organe de transfert 16.

Dans une première étape, les articles 2 sont acheminés un à un jusqu'au poste d'alimentation 5 par l'intermédiaire du convoyeur d'alimentation 4 et de la roue étoilée 20 à une vitesse d'entrée VE. Un organe d'entraînement 19a est engagé en amont d'un article 2 appartenant à un lot 3 s'étendant en aval de l'organe d'entraînement 19a. L'organe d'entraînement se trouve alors dans une première position angulaire de sa trajectoire circulaire.

Le dispositif de commande règle la vitesse VT du premier organe de transfert 15 de façon ce qu'elle soit sensiblement égale à VE au moment de l'engagement de l'organe d'entraînement. De cette manière, la prise en charge d'un lot d'article par un organe d'entraînement se fait sans changement brusque de vitesse qui pourrait causer un entrechoquement, voire une chute, des articles.

Le nombre d'articles par lot est déterminé par l'opérateur en réglant l'espace entre deux organes d'entraînement 19 successifs. Ce réglage peut avoir lieu sans interrompre la chaîne de conditionnement en ralentissant par exemple un organe de transfert par rapport à un autre jusqu'à ce que les organes d'entraînement 19, se suivant l'un derrière l'autre, de ces organes de transfert soient suffisamment espacés.

L'étape suivante consiste à accélérer le premier organe de transfert 15 de façon à écarter l'organe d'entraînement 19a de l'organe 19b le suivant. On crée ainsi un espace, également appelé pas, entre chaque lot 3. Ce pas peut également être réglé par l'opérateur en adaptant les profils de vitesse de chaque moyen moteur. Ainsi en augmentant l'accélération du premier organe de transfert 15, on augmente le pas entre chaque lot 3.

L'organe d'entraînement est ensuite désengagé au poste de sortie 7 dans une deuxième position angulaire de sa trajectoire circulaire. Ce désengagement se fait à une vitesse VT sensiblement égale à la vitesse VS. De cette façon, le transfert vers le convoyeur de sortie 6 se fait sans changement brusque de vitesses. Le lot 3 est ensuite pris en charge par le convoyeur de sortie 6.

Au moment du désengagement de l'organe d'entraînement 19a, l'organe d'entraînement 19b est engagé en amont d'un article de façon à former le lot 3 suivant, comme on peut le constater sur la figure 2.

Afin d'éviter les chutes d'articles 2 hors du dispositif 1 pendant qu'ils sont pris en charge par les moyens de transfert 8, le procédé peut également comprendre une étape de retour du premier organe de transfert 15 après que l'organe d'entraînement 19a a été désengagé au poste de sortie 7. De cette façon, en inversant le sens de rotation du premier organe de transfert 15, l'organe d'entraînement 19a est engagé en aval du lot 3 entraîné par l'organe d'entraînement 19b. La vitesse du premier organe de transfert 15 est ensuite adaptée à celle du deuxième organe de transfert 16 de façon à ce que l'organe d'entraînement 19b pousse un lot d'articles 3 pendant que l'organe d'entraînement 19a empêche les articles 2 de ce lot de tomber.

## Revendications

1. Procédé de formation et d'espacement de lots (3) successifs d'articles (2) comprenant les phases suivantes :
- acheminer des articles (2) un à un le long d'un convoyeur d'alimentation (4) jusqu'à un poste d'alimentation (5), à une vitesse d'entrée (VE) sensiblement constante ;
- grouper et transférer un nombre déterminé d'articles (2) sous forme d'un lot (3) du poste d'alimentation (5) à un poste de sortie (7) par l'intermédiaire de moyens de transfert rotatifs (8) du type comprenant au moins un premier et un deuxième éléments rotatifs (9, 10) coaxiaux aptes à être mis en rotation indépendamment l'un de l'autre par des moyens moteurs (12, 13) asservis en vitesse par un dispositif de commande, le premier et le deuxième éléments étant respectivement reliés à un premier et à un deuxième organes de transfert rotatifs (15, 16) ayant une vitesse de transfert (VT) non constante et déterminée par le dispositif de commande ;
- acheminer les articles (2) sous forme de lots (3) successifs le long d'un convoyeur de sortie (6) à partir du poste de sortie (7), à une vitesse de sortie (VS) supérieure à la vitesse d'entrée (VE),
la phase de groupement et de transfert d'articles (2) comprenant les étapes suivantes :
- engager, au poste d'alimentation, un premier organe d'entraînement (19a) d'articles porté par le premier organe de transfert rotatif (15) en amont d'un article (2) faisant partie d'un lot (3) d'articles en aval à une vitesse de transfert (VT) égale à la vitesse d'entrée (VE) ;
- accélérer progressivement le premier organe de transfert rotatif (15) et ainsi le lot d'articles jusqu'au poste de sortie (7) de façon à ce que la vitesse de transfert (VT) au poste de sortie soit égale à la vitesse de sortie (VS) ;
- désengager, au poste de sortie (7), le premier organe d'entraînement (19a) d'articles (2),
- engager au poste d'alimentation (5) un deuxième organe d'entraînement (19b) porté par le deuxième organe de transfert (16) avec un espace variable et déterminé par le dispositif de commande entre le premier et le deuxième organes d'entraînement, de manière que le réglage du dispositif de commande permette de faire varier le nombres d'articles (2) par lot (3) et/ou le pas entre chaque lot (3), ledit procédé étant **caractérisé en ce que** les premiers et deuxième éléments rotatifs coaxiaux (9, 10) sont respectivement des arbres et les premier et deuxième organes de transfert (19a, 19b) sont respectivement des disques coaxiaux rotatifs autour de l'axe (R) des arbres coaxiaux (9,10).

2. Procédé selon la revendication 1, **caractérisé en ce que** la phase de groupement et de transfert d'articles (2) comprend une étape de retour du premier organe d'entraînement (19a) après qu'il a été désengagé au poste de sortie (7) de façon à ce que cet organe d'entraînement (19a) forme organe de retenue pour le lot (3) d'articles entraîné par le deuxième organe d'entraînement (19b).

3. Dispositif (1) pour la formation et l'espacement de lots (3) successifs d'articles (2), pour la mise en oeuvre du procédé selon l'une des revendications 1 ou 2, comprenant :
- un convoyeur d'alimentation (4) le long duquel les articles (2) sont acheminés un à un jusqu'à un poste d'alimentation (5) à une vitesse d'entrée (VE) sensiblement constante ;
- un convoyeur de sortie (6) apte à recevoir depuis un poste de sortie (7) des lots (3) successifs d'articles pour les acheminer à une vitesse de sortie (VS) sensiblement constante et supérieure à la vitesse d'entrée (VE) ;
- des moyens de transfert (8) des articles (2) depuis le poste d'alimentation (5) jusqu'au poste de sortie (7) tels que les articles acheminés un à un au poste d'alimentation (5) se trouvent en lots (3) successifs au poste de sortie (7), lesdits moyens de transfert étant du type comprenant au moins un premier et un deuxième éléments rotatifs (9, 10) coaxiaux, chacun étant apte à être mis en rotation indépendamment l'un de l'autre par un moyen moteur (12, 13) asservi en vitesse par un dispositif de commande, lesdits éléments rotatifs entraînant en rotation et étant reliés à un premier et à un deuxième organes de transfert rotatifs (15, 16) respectivement,
chaque organe de transfert (15, 16) portant au moins un organe d'entraînement (19) d'articles agencé pour être engagé au poste d'alimentation (5) en amont d'un article (2) faisant partie d'un lot (3) d'articles en aval comprenant un nombre déterminé d'articles (2) et être désengagé au poste de sortie (7), cet organe de transfert ayant une vitesse de transfert (VT) non constante et déterminée par le dispositif de commande par l'intermédiaire des éléments rotatifs (9, 10),
ladite vitesse de transfert (VT) étant telle qu'elle est sensiblement égale à la vitesse d'entrée (VE) lorsque l'organe d'entraînement (19) est engagé au poste d'alimentation (5), puis augmente progressivement jusqu'à être sensiblement égale à la vitesse de sortie (VS) lorsque l'organe d'entraînement (19) est désengagé au poste de sortie (7),
la structure du dispositif (1) étant telle qu'un premier organe d'entraînement (19a) porté par le premier organe de transfert (15) est suivi par un deuxième organe d'entraînement (19b) porté par le deuxième organe de transfert (16) avec un espace variable et déterminé par le dispositif de commande entre le premier et le deuxième organes d'entraînement, de manière que le réglage du dispositif de commande permette de faire varier le nombre d'articles (2) par lot (3) et/ou le pas entre chaque lot (3),
ledit dispositif (1) de formation et d'espacement de lots étant **caractérisé en ce que** les premiers et deuxième éléments rotatifs coaxiaux (9, 10) sont respectivement des arbres et les premier et deuxième organes de transfert (19a, 19b) sont respectivement des disques coaxiaux rotatifs autour de l'axe (R) des arbres coaxiaux (9,10).

4. Dispositif selon la revendication 3, **caractérisé en ce que** lesdits disques sont superposés l'un sur l'autre et comprenent chacun sur leur périphérie au moins un organe d'entraînement (19).

5. Dispositif selon l'une des revendications 3 ou 4, **caractérisé en ce que** les organes d'entraînement (19) d'articles sont des dents saillant radialement des organes de transfert, chaque dent comprenant une face amont et une face aval agencées pour présenter une forme complémentaire d'une partie d'un article (2) de façon à pouvoir respectivement entraîner un article par l'intermédiaire de la face aval ou retenir un article par l'intermédiaire de la face amont, chaque dent décrivant un cercle en passant par une première position angulaire dans laquelle elle est engagée au poste d'alimentation (5) et une deuxième position angulaire dans laquelle elle est désengagée au poste de sortie (7).

6. Dispositif selon l'une des revendications 3 à 5, **caractérisé en ce que** les moyens de transfert (8) comprennent en outre des moyens (20) disposés à proximité du poste d'alimentation, aptes à ordonner et cadencer les articles (2) en provenance du convoyeur d'alimentation (4), pour qu'ils présentent le positionnement et l'écartement voulus au moment de l'engagement d'un organe d'entraînement (19) en amont d'un article (2).

7. Dispositif selon la revendication 6, **caractérisé en ce que** les moyens (20) pour ordonner et cadencer les articles se présentent sous la forme d'une roue étoilée, montée pivotante autour d'un axe de rotation (R') et entraînée par un moyen moteur (21), comprenant à sa périphérie une denture (21) apte à engrener et désengrener les articles (2), la denture présentant des logements (22) aptes à recevoir individuellement les articles (2), la vitesse tangentielle de ladite roue étoilée étant sensiblement égale à la vitesse d'entrée (VE).

8. Dispositif selon l'une des revendications 3 à 7, **caractérisé en ce que** le dispositif de commande pilote tous les moyens moteurs selon des profils de vitesse prédéterminés de sorte à pouvoir déterminer le nombre d'articles par lot et/ou le pas entre chaque lot.

9. Dispositif selon l'une des revendications 3 à 8, **caractérisé en ce que** les moyens moteurs se présentent sous la forme de moteurs dont les vitesses de rotation sont réglables de façon continue.

10. Dispositif selon la revendication 9, **caractérisé en ce que** les moteurs sont des moteurs électriques, du type à courant continu sans balais.

## Claims

1. Method of forming and spacing successive batches (3) of articles (2) comprising the following phases:
- transporting articles (2) one by one along the length of an infeed belt (4) to an input station (5) at a substantially constant entry speed (VE);
- grouping together and transferring a given number of articles (2) in the form of a batch (2) from the input station (5) to an output station (7) by rotating transport means (8) of the type comprising at least a first and a second coaxial rotating element (9, 10) capable of rotating independently from each other by motor means (12, 13) with their speed controlled by a control device, the first and second elements being connected to first and second rotating transfer systems (15, 16) respectively, having a non-constant transfer speed (VT) determined by the control device;
- transporting the articles (2) in the form of successive batches (3) along the length of an outfeed belt (6) from an output station (7) at an exit speed (VS) higher than the entry speed (VE),
the phase of grouping and transferring articles (2) comprising the following steps:
- engaging, at the input station, a first article driving system (19a) mounted on the first rotating transport system (15) upstream of the article (2) forming part of a batch (3) of downstream articles at a transfer speed (VT) equal to the entry speed (VE);
- gradually speeding up the first rotating transfer system (15) and thus the batch of articles to the output station (7) in such a way that the transfer speed (VT) at the output station is equal to the exit speed (VS);
- disengaging, at the output station (7), the first article (2) driving system (19a);
- engaging, at the input station (5), a second driving system (19b) mounted on the second driving system (16) with a variable space determined by the control device between the first and the second driving systems, in such a way that the adjustment of the control device makes it possible to change the number of articles (2) per batch (3) and/or the spacing between each batch (3),
said method being **characterised in that** the first and second coaxial rotating elements (9, 10) are respectively shafts and the first and second transfer systems (19a, 19b) are respectively coaxial disks rotating around the axis (R) of the coaxial shafts (9, 10).

2. Method according to claim 1, **characterised in that** the phase of grouping and transferring articles (2) comprises a step of returning the first driving system (19a) after it has been disengaged from the output station (7) so that this driving system (19a) forms a retainer for the batch (3) of articles driven by the second driving system (19b).

3. Device (1) for forming and spacing successive batches (3) of articles (2), for implementing the method according to claim 1 or 2, comprising:
- an infeed belt (4) along which the articles (2) are transported one by one to an input station (5) at a substantially constant entry speed (VE);
- an outfeed belt (6) capable of receiving successive batches (3) of articles from an output station (7) so as to transport them at an exit speed (VS) that is substantially constant and higher than the entry speed (VE);
- means (8) of transferring the articles (2) from the input station (5) to the output station (7) so that the articles transported one by one to the input station (5) arrive in successive batches (3) at the output station (7), said transfer means being of the type comprising at least a first and second coaxial rotating element (9, 10), each being capable of being rotated independently from the other by motor means (12, 13), the speed of which is controlled by a control device, said rotating elements respectively driving in rotation and being connected to a first and second rotating transfer system (15, 16),
each transfer system (15, 16) having at least one article driving system (19) arranged so as to be engaged at the input station (5) upstream from an article (2) which is part of a downstream batch (3) of articles comprising a given number of articles (2) and being disengaged from the output station (7), this transfer system having a non-constant transfer speed (VT) determined by the control device by means of the rotating elements (9, 10),
said transfer speed (VT) being such that it is substantially equal to the entry speed (VE) when the driving system (19) is engaged with the input station (5), and then increased gradually until it is substantially equal to the output speed (VS) when the driving system (19) is disengaged from the output station (7),
the structure of the device (1) being such that a first driving system (19a) mounted on the first transfer system (15) is followed by a second driving system (19b) mounted on the second transfer system (16) with a variable space determined by the control device between the first and second driving systems, in such a way that the adjustment of the control device makes it possible to change the number of articles (2) per batch (3) and/or the spacing between each batch (3),
said batch formation and spacing device (1) being **characterised in that** the first and second coaxial rotating elements (9, 10) are respectively shafts and the first and second transfer systems (19a, 19b) are respectively the coaxial discs rotating around the axis (R) of the coaxial shafts (9, 10).

4. Device according to claim 3, **characterised in that** said discs are stacked on top of one another and each one comprises at least one driving system on its periphery (19).

5. Device according to one of the claims 3 or 4, **characterised in that** the article driving systems (19) are teeth protruding radially from the transfer systems, each tooth comprising an upstream face and a downstream face arranged to have a shape that complements a part of an article (2) so as to be able to drive an article by means of the downstream face or retain an article by means of the upstream face respectively, each tooth describing a circle when it passes through a first angular position in which it engages with the input station (5) and a second angular position in which it is disengaged from the output station (7) .

6. Device according to one of the claims from 3 to 5, **characterised in that** the transfer means (8) also comprise means (20) arranged near the input station, capable of organising and spacing the articles (2) coming from the infeed belt (4), so that they have the desired positioning and spacing at the time of engaging a driving system (19) upstream from an article (2).

7. Device according to claim 6, **characterised in that** the means (20) for organising and spacing the articles are in the form of a star wheel, mounted such as to pivot about a rotational axis (R') and driven by motor means (21), comprising gear teeth on its periphery which are capable of meshing articles (2) and bringing them out of mesh, the gear teeth having housings (22) capable of receiving individual articles (2), the tangential speed of said star wheel being substantially equal to the entry speed (VE).

8. Device according to one of the claims from 3 to 7, **characterised in that** the control device controls all the motor means according to predetermined speed profiles so as to be able to determine the number of articles per batch and/or the spacing between each batch.

9. Device according to one of the claims from 3 to 8, **characterised in that** the motor means are in the form of motors, with continuously adjustable rotation speeds.

10. Device according to claim 9, **characterised in that** the motors are electric motors, of the brushless direct-current type.

## Patentansprüche

1. Verfahren zum Anordnen und Abstandhalten von aufeinanderfolgenden Losen (3) mit Artikeln (2), das die folgenden Phasen umfaßt:
- Die Artikel (2) einzeln einen Beschickungsförderer (4) entlang bei deutlich konstanter Eingangsgeschwindigkeit (EG) bis zum Beschickungsposten (5) leiten;
- Eine bestimmte Anzahl von Artikeln (2) gruppieren und in Form eines Loses (3) vom Beschickungsposten (5) zu einem Ausgangsposten (7) transferieren und zwar über drehende Transfermittel (8) von der Art, die zumindest ein erstes und ein zweites koaxiales Drehelement (9, 10) umfaßt, die geeignet sind, unabhängig voneinander durch Antriebsmittel (12, 13) in Drehung versetzt werden zu können, deren Geschwindigkeit von einer Steuervorrichtung abhängt, wobei das erste und das zweite Element mit einem ersten beziehungsweise einem zweiten drehenden Transferorgan verbunden sind (15, 16), die eine nicht konstante und von der Steuervorrichtung bestimmte Transfergeschwindigkeit (TV) haben;
- Die Artikel (2) in Form von Losen (3) nacheinander ab dem Ausgangsposten (7) einen Ausgangsförderer (6) entlang bei einer Ausgangsgeschwindigkeit (AG) leiten, die höher als die Eingangsgeschwindigkeit (EG) ist,
wobei die Phase mit der Gruppierung und dem Transfer von Artikeln (2) die folgenden Schritte umfaßt:
- Am Beschickungsposten ein erstes Mitnahmeorgan (19a) von Artikeln aufnehmen, das vom ersten drehenden Transferorgan (15) vor einem Artikel (2) getragen wird, der zu einem nachfolgenden Los (3) von Artikeln gehört, und dies bei einer mit der Eingangsgeschwindigkeit (EG) gleichen Transfergeschwindigkeit (TG);
- Das erste drehende Transferorgan (15) und damit das Los mit den Artikeln nach und nach bis zum Ausgangsposten (7) beschleunigen, damit die Transfergeschwindigkeit TG) am Ausgangsposten gleich der Ausgangsgeschwindigkeit (AG) ist;
- Am Ausgangsposten (7) das erste Mitnahmeorgan (19a) von Artikeln lösen,
- Am Beschickungsposten (5) ein vom zweiten Transferorgan (16) getragenes zweites Mitnahmeorgan (19b) mit einem variablen und von der Steuervorrichtung bestimmten Raum zwischen dem ersten und dem zweiten Mitnahmeorgan aufnehmen, so daß mit der Einstellung der Steuervorrichtung die Anzahl von Artikeln (2) pro Los (3) und/oder der Abstand zwischen den Losen (3) variiert werden kann, wobei das besagte Verfahren **dadurch gekennzeichnet ist, daß** das erste und das zweite koaxiale Drehelement (9, 10) Wellen beziehungsweise Drehscheiben sind.

2. Verfahren nach Anspruch 1, **dadurch gekennzeichnet, daß** die Phase der Gruppierung und des Transfers von Artikeln (2) einen Schritt mit Rückkehr des ersten Mitnahmeorgans (19a) umfaßt, nachdem es am Ausgangsposten (7) gelöst worden ist, so daß dieses Mitnahmeorgan (19a) ein Halteorgan für das Los (3) von Artikeln bildet, das vom zweiten Mitnahmeorgan (19b) mitgeführt wird.

3. Vorrichtung (1) zum Anordnen und Abstandhalten von aufeinanderfolgenden Losen (3) mit Artikeln (2) für den Einsatz des Verfahrens nach einem beliebigen der vorstehenden Ansprüche 1 oder 2, die folgende Teile umfaßt:
- Einen Beschickungsförderer (4), an dem entlang die Artikel (2) einzeln bei einer deutlich konstanten Eingangsgeschwindigkeit (EG) bis zu einem Beschickungsposten (5) geleitet werden;
- Einen Ausgangsförderer (6), der geeignet ist, von einem Ausgangsposten (7) ausgehend aufeinander folgende Lose (3) mit Artikeln zu empfangen, um sie bei einer deutlich konstanten und höheren Ausgangsgeschwindigkeit (AG) als die Eingangsgeschwindigkeit (EG) zu leiten;
- Mittel zum Transfer (8) der Artikel (2) ab dem Beschickungsposten (5) bis zum Ausgangsposten (7), und zwar so, daß sich die einzeln zum Beschickungsposten (5) geleiteten Artikel als aufeinanderfolgende Lose (3) am Ausgangsposten (7) wiederfinden, wobei die besagten Transfermittel von der Art sind, die zumindest ein erstes und ein zweites koaxiales Drehelement (9, 10) umfaßt, wobei jedes geeignet ist, unabhängig voneinander durch ein Antriebsmittel (12, 13) in Drehung versetzt werden zu können, dessen Geschwindigkeit von einer Steuervorrichtung abhängt, wobei die besagten Drehelemente in Drehung versetzen und mit einem ersten beziehungsweise zweiten drehenden Transferorgan verbunden sind (15, 16),
wobei jedes Transferorgan (15, 16) zumindest ein Mitnahmeorgan (19) für Artikel trägt, das so gestaltet ist, daß es am Beschickungsposten (5) vor einem Artikel (2) aufgenommen wird, der zu einem nachfolgenden Los (3) von Artikeln gehört, das eine bestimmte Anzahl von Artikeln (2) umfaßt und am Ausgangsposten (7) gelöst wird, wobei dieses Transfermittel eine nicht konstante Transfergeschwindigkeit (TG) hat, und die von der Steuervorrichtung über die Drehelemente (9, 10) bestimmt wird,
wobei die besagte Transfergeschwindigkeit (TG) deutlich gleich der Eingangsgeschwindigkeit (EG) ist, wenn das Mitnahmeorgan (19) am Beschickungsposten (5) aufgenommen wird und dann nach und nach ansteigt, bis sie deutlich gleich der Ausgangsgeschwindigkeit (AG) ist, wenn das Mitnahmeorgan (19) am Ausgangsposten (7) gelöst wird,
wobei die Struktur der Vorrichtung (1) dergestalt ist, daß auf ein erstes Mitnahmeorgan (19a), das vom ersten Transferorgan (15) getragen wird, ein zweites Antriebsorgan (19b) folgt, das vom zweiten Transferorgan (16) getragen wird, und dies mit einem variablen und von der Steuervorrichtung bestimmten Abstand zwischen dem ersten und dem zweiten Mitnahmeorgan, so daß mit der Einstellung der Steuervorrichtung die Anzahl von Artikeln (2) pro Los (3) und/oder der Abstand zwischen jedem Los (3) variiert werden kann,
wobei die besagte Vorrichtung (1) zum Anordnen und Abstandhalten von Losen (3) **dadurch gekennzeichnet ist, daß** das erste und das zweite koaxiale Drehelement (9, 10) Wellen sind, und daß das erste und zweite Transfersystem (19a, 19b) jeweils koaxiale um die Achse (R) der koaxialen Wellen (9, 10) drehende Scheiben sind.

4. Vorrichtung nach Anspruch 3, **dadurch gekennzeichnet, daß** das erste und das zweite Transferorgan (19a, 19b) koaxiale um die Achse (R) der koaxialen Wellen (9, 10) drehende Scheiben sind, wobei die besagten Scheiben übereinander liegen und jede auf ihrer Peripherie zumindest ein Mitnahmeorgan (19) umfaßt.

5. Vorrichtung nach einem beliebigen der vorstehenden Ansprüche 3 oder 4, **dadurch gekennzeichnet, daß** die Mitnahmeorgane (19) von Artikeln radial von den Transferorganen vorstehende Zähne sind, wobei jeder Zahn eine obere und eine untere Seite hat, die so gestaltet sind, daß sie eine ergänzende Form eines Teils eines Artikels (2) aufweisen, so daß sie vermittels der unteren Seite einen Artikel mitnehmen beziehungsweise vermittels der Oberseite einen Artikel zurückhalten können, wobei jeder Zahn einen Kreis beschreibt, wenn er durch eine erste Winkelposition geht, in der er am Beschickungsposten (5) aufgenommen wird, und eine zweite Winkelposition, in der er am Ausgangsposten (7) gelöst wird.

6. Vorrichtung nach einem beliebigen der vorstehenden Ansprüche 3 bis 5, **dadurch gekennzeichnet, daß** die Transfermittel (8) außerdem Mittel (20) umfassen, die in der Nähe des Beschickungspostens angeordnet und geeignet sind, die vom Beschickungsförderer (4) kommenden Artikel (2) in eine Reihenfolge zu bringen und zu takten, damit sie im Moment der Aufnahme durch ein Mitnahmeorgan (19) vor einem Artikel (2) die gewünschte Position und den gewünschten Abstand aufweisen.

7. Vorrichtung nach Anspruch 6, **dadurch gekennzeichnet, daß** die Mittel (20) zum Ordnen und Takten der Artikel die Form eines Sternrads aufweisen, das um eine Drehachse (R') drehend montiert ist und von einem Antriebsmittel (21) mitgeführt wird, das an seiner Peripherie eine Zahnung (21) umfaßt, die geeignet ist, die Artikel (2) ein- und auszurücken, wobei die Zahnung Aufnahmen (22) aufweist, die die Artikel individuell aufnehmen können, wobei die Tangentialgeschwindigkeit des besagten Rades deutlich gleich der Eingangsgeschwindigkeit (EG) ist.

8. Vorrichtung nach einem beliebigen der vorstehenden Ansprüche 3 bis 7, **dadurch gekennzeichnet, daß** die Steuervorrichtung alle Antriebsmittel nach vorbestimmten Geschwindigkeitsprofilen führt, so daß die Anzahl Artikel pro Los und/oder der Abstand zwischen den einzelnen Losen bestimmt werden kann.

9. Vorrichtung nach einem beliebigen der vorstehenden Ansprüche 3 bis 8, **dadurch gekennzeichnet, daß** die Antriebsmittel Motore sind, deren Drehzahlen kontinuierlich regelbar sind.

10. Vorrichtung nach Anspruch 9, **dadurch gekennzeichnet, daß** die Motoren Elektromotoren von der Art mit Gleichstrom ohne Bürsten sind.
